**Europäisches Patentamt**

**European Patent Office**

**Office européen des brevets**

(11) Veröffentlichungsnummer: **0 475 547 A1**

(12) **EUROPÄISCHE PATENTANMELDUNG**

(21) Anmeldenummer: **91250227.5**

(22) Anmeldetag: **15.08.91**

(51) Int. Cl.5: **B60J 5/04**

(30) Priorität: **17.08.90 DE 4026459**

(43) Veröffentlichungstag der Anmeldung:
**18.03.92 Patentblatt 92/12**

(84) Benannte Vertragsstaaten:
**DE ES FR GB IT**

(71) Anmelder: **MANNESMANN Aktiengesellschaft**
**Mannesmannufer 2**
**W-4000 Düsseldorf 1(DE)**

(72) Erfinder: **Wieting, Enno**
**Kückelswerth 7**
**W-4030 Ratingen 6(DE)**
Erfinder: **Fischer, Joachim**
**Borbecker Strasse 123**
**W-4330 Mühlheim(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Aufprallträger.**

(57) Die Erfindung betrifft einen Aufprallträger mit hoher Festigkeit, Zähigkeit und Verformungsarbeit zum Einbau in die Tür eines Kraftfahrzeuges, insbesondere eines Personenkraftwagens. Um einen Aufprallträger zu entwickeln, der bei Verwendung einer kostengünstigen Stahllegierung und bei Einhaltung der geforderten meachanischen Werte ein geringeres Gewicht aufweist, wird vorgeschlagen, daß der Aufprallträger aus einem Grundrohr (1) besteht mit einem verstärkten Abschnitt (2, 3, 4, 12), der sich über eine bestimmte Länge im mittleren Bereich des Grundrohres (1) erstreckt.

Fig. 6

Die Erfindung betrifft einen Aufprallträger aus Metall mit hoher Steifigkeit für Kraftfahrzeugtüren, insbesondere von Personenkraftwagen gemäß dem Gattungsbegriff des Anspruches 1.

Aufprallträger dienen als Versteifung von Kraftfahrzeugtüren, die im Falle eines seitlichen Zusammenstosses Aufprallenergie aufnehmen und in mechanische Arbeit umwandeln. Dadurch sollen die Fahrzeuginsassen gegen Verletzungen geschützt werden. Damit ein solcher Aufprallträger diese Sicherheitsfunktion übernehmen kann, müssen beispielsweise folgende Werte erfüllt werden.

Zugfestigkeit Rm mindestens 1.100 N/qmm

Streckgrenze Rt mindestens 800 N/qmm

Bruchdehnung A5 mindestens 8 % oder ein Arbeitsvermögen W-150

von mindestens 1.900 Joule je nach Abmessung des Profiles.

Diese Mindestanforderungen können je nach Spezifikation des Automobilherstellers niedriger oder höher liegen.

Das Arbeitsvermögen wird getestet, indem ein Aufprallträger in einem 3-Punkt-Biegeversuch 150 mm weit durchgebogen wird. Dabei wird die aufgebrachte Kraft über den Biegeweg registriert und der Flächeninhalt unterhalb der Kurve ermittelt. Dieses Integral ergibt dann das gesuchte Arbeitsvermögen.

Da der Aufprallträger für den Einbau auch in Kleinwagen mit schmalen Türen geeignet sein soll, besteht die Forderung, diesen in seinen Umfangsmaßen möglichst klein zu halten. Des weiteren wird die Forderung erhoben, daß das Gesamtgewicht des Kraftfahrzeuges durch den Einbau des Aufprallträgers nur unwesentlich erhöht wird.

Ein gattungsmäßiger Aufprallträger ist der DE-PS 36 06 024 zu entnehmen. Das rechteckige, vorzugsweise quadratische Hohlprofil mit am Innen- und Außenflansch beidends überkragenden Wulstabschnitten ist ein Strangpreßprofil aus Leichtmetall. Eine besondere Ausführungsform (Fig. 9) zeichnet sich dadurch aus, daß der mittlere Bereich des Aufprallträgers über eine bestimmte Länge mit einem innen angeordneten Rohrabschnitt verstärkt ist. Nachteilig bei diesem Vorschlag ist, daß bei Verwendung von Leichtmetall die Wanddicken des Profils sehr groß gewählt werden müssen, um das geforderte Arbeitsvermögen zu erreichen. Weiterhin ist ein solches Profil wenig anpassungsfähig bei der Umgehung von Hindernissen im Einbaubereich der Tür. Darüberhinaus muß für das einmal gewählte Profil ein teures Strangpreßwerkzeug angeschafft werden, das im Falle einer konstruktiven Änderung der Tür oder bei einem Modellwechsel nicht mehr verwendet werden kann.

Ein anderer Lösungsvorschlag ist der DE 37 28 476 zu entnehmen, bei dem durch Verwendung einer besonderen Stahllegierung die Werte für die Zugfestigkeit und Streckgrenze eines Türverstärkerrohres gegenüber dem genannten Stand der Technik erhöht sind. Als nachteilig muß bei diesem Vorschlag angesehen werden, daß die die Festigkeit steigernde Wirkung nur durch Zulegierung von teueren Elementen wie Nickel und Molybdän erreicht wird.

Aufgabe der Erfindung ist es, einen Aufprallträger zu entwickeln, der bei Verwendung einer kostengünstigen Stahllegierung und bei Einhaltung der geforderten mechanischen Werte ein geringeres Gewicht aufweist und der für unterschiedliche Türkonstruktionen leicht anpaßbar ist.

Diese Aufgabe wird mit den im Patentanspruch 1 angegebenen Merkmalen gelöst. Vorteilhafte Ausbildungen sind in den Unteransprüchen festgelegt.

Bei dem vorgeschlagenen Aufprallträger macht man sich die Erkenntnis zunutze, daß das Arbeitsvermögen unter anderem von der Größe des Widerstandsmomentes des Konstruktionsteiles abhängig ist. Da der Testversuch zur Ermittlung des Arbeitsvermögens in etwa der Beanspruchung eines frei aufliegenden Trägers mit mittig angreifender Last entspricht, liegt der gefährdete Querschnitt für das Versagen des Bauteiles in seiner Mitte. Entsprechend den bekannten Gleichungen für den statischen Biegeversuch bei einem als Rohr ausgebildeten Träger ist die Durchbiegung f umgekehrt proportional der vierten Potenz des äußeren Durchmessers mit einem Verkleinerungsfaktor in Abhängigkeit vom Verhältnis Durchmesser zu Wanddicke. Um diesen an sich bekannten Zusammenhang optimal im Hinblick auf ein Türverstärkerrohr zu nutzen, wird vorgeschlagen, den gefährdeten mittleren Bereich des Aufprallträgers gezielt gegen Biegen und/oder Einknicken zu verstärken. Dazu wird vorgeschlagen, ein über eine bestimmte Länge sich erstreckendes außen aufgeschobenes und/oder innen eingeschobenes Rohrstück mit dem Grundrohr zu verbinden. Die Verbindung mit dem Grundrohr ist erforderlich, damit das verstärkende Teil lagemäßig auf dem Grundrohr fixiert ist. Man unterscheidet dabei stoffschlüssige (z.B. Kleben, Löten, Schweißen), formschlüssige (z.B. Nieten) oder kraftschlüssige (z.B. Schrumpfen) Verbindungen. Als Schweißtechniken bieten sich das Punkt-, Buckel-, Laser- oder Kondensatorentladungsschweißen an. Alternativ kann auch ein Schlitzrohr verwendet werden, das in seiner Abmessung so gewählt wird, daß beim Aufschieben auf das Grundrohr bzw. beim Einschieben in das Grundrohr eine Klemmwirkung erreicht wird und eine spezielle Lagebefestigung meistens nicht erforderlich ist. Um sicherzustellen, daß auch nach einem längeren Gebrauch es zu keiner Loslösung des Schlitzrohres kommt, ist es empfehlenswert, auch das Schlitzrohr zusätzlich form- oder stoffschlüssig zu fixieren.

Dies gilt auch für die Variante eines aufgeschrumpften Rohrabschnittes.

Nach einem weiteren Merkmal der Erfindung ist die Verstärkung als ein separater Abschnitt eines Rohres ausgebildet, das mit den beidseitig angrenzenden Abschnitten des Grundrohres verbunden ist. Die Angleichung der Wanddicken im Verbindungsbereich kann entweder durch Abstrekken der Enden des verdickten Abschnittes oder durch Anstauchen der Enden der Abschnitte des angrenzenden Grundrohres erfolgen. Als Verbindungstechnik bietet sich vorteilhafterweise das Reibschweißen an, da damit auch in einfacher Weise unterschiedliche Werkstoffe in kurzen Taktzeiten miteinander verbunden werden können.

Weiterbildend wird außerdem vorgeschlagen, die Verstärkung unmittelbar aus dem Grundrohr in Form eines in der Wand verdickten Abschnittes herzustellen. Dies hat den Vorteil, daß der Übergang vom Grundrohr in den verdickten Bereich kontinuierlich erfolgt und keine Querschnittssprünge auftreten. Im Hinblick auf eine Gewichtsoptimierung ist es besonders vorteilhaft, wenn das Grundrohr insgesamt als Träger gleicher Biegebeanspruchung ausgelegt ist unter der Annahme, daß eine Einzellast mittig angreift und eine bestimmte Durchbiegung zulässig ist. Diese Auslegung hat den Vorteil, daß in jeder Querschnittsebene nur die Wanddicke vorhanden ist, die für die Aufnahme der Last erforderlich ist. Solche über eine bestimmte Länge sich erstreckende Verdickung, unabhängig ob die Verdickung radial nach außen oder nach innen sich erstreckt bzw. gleichmäßig nach außen und nach innen verteilt ist, können über unterschiedliche Verfahrensweisen hergestellt werden. Eine der Möglichkeiten ist z.B. ein Ziehen mit Stufendorn (DE 30 21 482) oder eine spanlose Umformung wie Drücken, Rollen oder Hämmern (DE 36 10 481) und falls erforderlich in Kombination mit einer spanabhebenden Umformung. Der Vorteil der integralen Verdickung gegenüber den aufgeschobenen bzw. eingeschobenen Rohrstükken besteht darin, daß die Verstärkung im Hinblick auf das zulässige größte Außenmaß, das Gewicht des Bauteiles und die Größe des tragenden Querschnittes gezielt radial einmal mehr nach außen bzw. mehr nach innen verschoben werden kann und auch die Länge des verdickten Abschnittes frei wählbar ist.

Eine weitere Möglichkeit den mittleren Bereich des Grundrohres zu verstärken besteht darin, diesen mit einer ein- oder mehrlagigen Umwicklung zu versehen. Dies können Drähte oder Bänder aus Metall oder auch hochfeste Fasern aus Kunststoff wie z. B. Aramidfaser sein. Die letztgenannte Variante hat noch den Vorteil, daß damit erheblich an Gewicht eingespart wird und die Wickeltechnik sehr einfach ist. Die Verstärkungswirkung ist dann besonders groß, wenn die Drähte, Bänder oder Fasern unter Zug aufgewickelt werden. Bei den Kunststoffasern gibt es außerdem noch die Möglichkeit der Einbettung der Fasern in einer sie umhüllenden aushärtbaren Masse, wie z. B. Epoxyharz. Alle genannten Ausführungsformen des erfindungsgemäßen Aufprallträger haben den Vorteil, daß der Aufprallträger nur in dem kritischen mittleren Bereich einen größeren Querschnitt aufweist, während in den angrenzenden Bereichen die Querschnitte geringer sind, so daß das Gesamtgewicht des Bauteiles geringer ist als vergleichbare Aufprallträger. Die Verstärkung wird in fertigungstechnisch einfacher Weise erzielt ohne daß ein legierungstechnisch teurer Werkstoff verwendet werden muß und ohne daß aufwendige Fertigungsverfahren - wie beispielsweise eine zusätzliche Wärmebehandlung - erforderlich sind.

Die verstärkende Wirkung kann in der Weise noch weiter erhöht werden, wenn z. B. der Innenraum des verstärkten Bereiches ausgeschäumt wird. Stoffmischungen für solche verstärkende Ausschäumungen sind z. B. der US-PS 4,861,097 zu entnehmen. Alternativ kann im Innenraum des verstärkten Bereiches auch ein Versteifungselement wie z. B. eine Zugfeder oder eine um die neutrale Faser verdrilltes Stahlband angeordnet werden. Die letztgenannten Versteifungselemente legen sich schraubenlinienförmig an die Innenwand des verstärkten Bereiches an und erhöhen somit den Widerstand des gefährdeten mittleren Bereiches gegen Einknicken. Nach einem weiteren Merkmal der Erfindung ist das Versteifungselement ein rechteckiges Hohlprofil, dessen lange Seite in Stoßrichtung liegt.

Bei der Anordnung von Rohrstücken bzw. Schlitzrohrabschnitten ist ein weiterer vorteilhafter Aspekt zu beachten. Um die Werkstoffkosten für das gegenüber dem verstärkten Bereich sehr viel längere Grundrohr niedrig zu halten, kann ein einfacher handelsüblicher Stahl, wie z. B. St.52 verwendet werden. Um nun den gefährdeten mittleren Bereich gezielt zu verstärken, weist der auf- bzw. eingeschobene oder auch eingeschweißte Rohrabschnitt eine höhere Festigkeit und/oder Zähigkeit auf als das Grundrohr. Die besseren mechanischen Werte können durch die Wahl eines bestimmten Werkstoffes z. B. durch Zulegierung ausgesuchter Elemente oder durch eine Kombination einer gezielten Umformung in Verbindung mit einer bestimmten Wärmebehandlung erreicht werden. Eine weitere Möglichkeit besteht darin, die Oberfläche des Rohrstückes z.B. durch Aufkohlen oder Aufstikken zu härten.

In der Zeichnung wird anhand einiger Ausführungsbeispiele der erfindungsgemäße Aufprallträger näher erläutert.

Es zeigen:

Figur 1 im Längsschnitt ein erstes Ausführungsbeispiel mit einem aufgeschobenen Außenrohr

Figur 2 im Längsschnitt ein zweites Ausführungsbeispiel mit einem eingeschobenen Innenrohr

Figur 3 im Längsschnitt einen Aufprallträger mit integralem Verstärkungsabschnitt

Figur 4 wie Fig. 1 jedoch mit einem zusätzlichen Versteifungselement in Form eines Stahlbandes

Figur 5 im Querschnitt die Anordnung eines zusätzlichen Versteifungselementes in Form eines Rechteckhohlprofiles alternativ eines Stegbleches

Figur 6 wie Fig. 3 jedoch mit einem eingeschweißten Verstärkungsteil

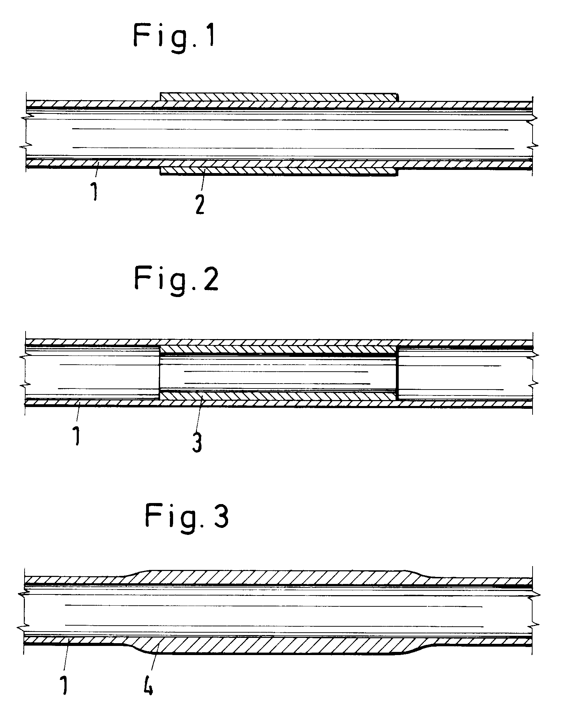

Figur 1 zeigt in einem Längsschnitt ein erstes Ausführungsbeispiel des erfindungsgemäßen Aufprallträger mit einem Grundrohr 1 und einem darauf aufgeschobenen Rohrabschnitt 2. Dieser aufgeschobene Rohrabschnitt 2 dient zur Verstärkung des mittleren Bereiches des Grundrohres 1. Die Art der Fixierung des aufgeschobenen Rohrabschnittes 2 wurde hier nicht dargestellt, da dies in der vorhergehenden Beschreibung ausführlich behandelt worden ist.

Eine Abwandlung von diesem Ausführungsbeispiel zeigt Figur 2 mit dem Unterschied, daß der verstärkende Rohrabschnitt 3 in das Grundrohr 1 eingeschoben ist. Eine weitere Variante ergibt sich dadurch, daß sowohl ein Außenrohr 2 aufgeschoben als auch ein Innenrohr 3 eingeschoben wird. Dieselben Möglichkeiten ergeben sich auch bei Anordnung eines klemmenden Schlitzrohres auf der Außen- und/oder Innenseite des Grundrohres 1.

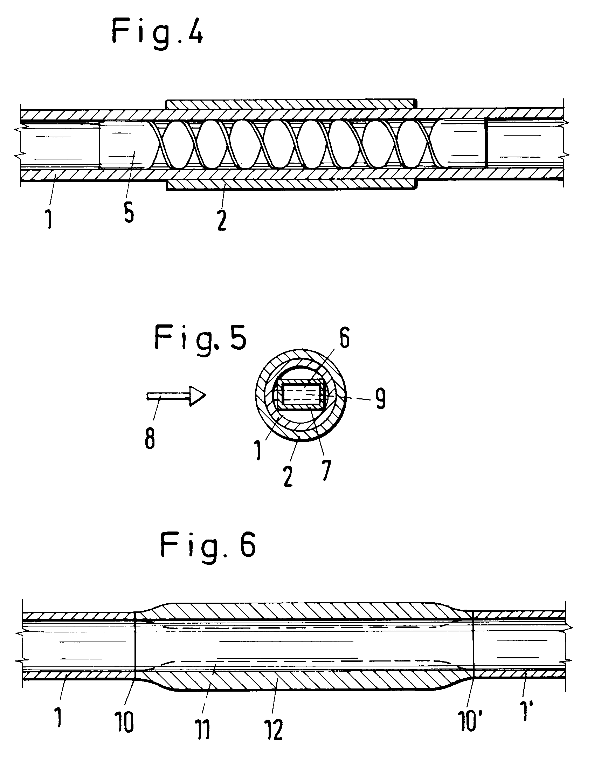

Figur 3 zeigt in einem Längsschnitt ein weiteres Ausführungsbeispiel, bei dem der verstärkte mittlere Abschnitt 4 integraler Bestandteil des Grundrohres 1 ist. Auf die Möglichkeiten der Herstellung eines solchen Abschnittes 4 ist in der vorhergehenden Beschreibung ausführlich eingegangen worden. Mit Hinweis auf Figur 6 sei noch hinzugefügt, daß die Wandverdickung ebenso auch ganz oder teilweise nach innen gelegt sein kann.

Figur 4 ist vergleichbar dem in Figur 1 dargestellten Ausführungsbeispiel nur mit dem Unterschied, daß in dem Innenraum des verstärkten Bereiches zusätzlich ein gewendeltes Stahlband 5 angeordnet ist. Dieses Stahlband 5 dient der weiteren Versteifung des mittleren Bereiches des Grundrohres 1.

Figur 5 zeigt in einem Querschnitt die Anordnung eines rechteckigen Hohlprofilteiles 6, dessen lange Seite 7 in der Stoßrichtung 8 des zu erwartenden Aufpralles liegt. Das sich ergebende höhere Gewicht durch das zusätzlich angeordnete Versteifungselement ist relativ gering, da die Wanddicke des Versteifungselementes 6 gering gehalten werden kann. Alternativ ist auch die Anordnung eines Stegbleches 9 (hier gestrichelt dargestellt) möglich, das gewichtsmäßig sich noch günstiger verhält als das Hohlprofilteil 6.

In Figur 6 ist vergleichbar wie in Figur 3 ein verstärkendes Teil 12 angeordnet, das durch zwei Schweißnähte 10,10' mit den Grundrohrabschnitten 1,1' verbunden ist. Die Verbindungsnähte 10,10' können beispielsweise Nähte sein, die durch Reibschweißen entstanden sind. Die im Teil 12 eingetragene gestrichelte Linie 11 soll andeuten, daß alternativ die verstärkende Wanddicke auch ganz oder teilweise nach innen gelegt werden kann. Die Wandangleichung im Verbindungsbereich kann durch Verformung der Enden des verstärkenden Teiles 12 oder alternativ durch Anstauchung der Enden der beiden Grundrohrabschnitte 1,1' erfolgen.

**Patentansprüche**

1. Aufprallträger aus Metall mit hoher Steifigkeit für Kraftfahrzeugtüren, insbesondere von Personenkraftwagen, der als Hohlprofil ausgebildet im mittleren Bereich über eine bestimmte Länge einen verstärkten Abschnitt aufweist,
   **dadurch gekennzeichnet,**
   daß der Aufprallträger aus einem Grundrohr (1) aus Stahl mit hoher Festigkeit, Zähigkeit und Verformungsarbeit besteht und der verstärkte Abschnitt als Stahlrohr ausgebildet ist, das als Außenrohr (2) mit dem Grundrohr (1) verbunden ist.

2. Aufprallträger nach Anspruch 1,
   **dadurch gekennzeichnet,**
   daß der verstärkte Abschnitt als Schlitzrohr ausgebildet ist, das außen mit dem Grundrohr (1) verbunden ist.

3. Aufprallträger nach Anspruch 1,
   **dadurch gekennzeichnet,**
   daß der verstärkte Abschnitt ein integraler Teil (4) des Grundrohres (1) ist, das nach beiden Seiten kontinuierlich in das Grundrohr (1) übergeht.

4. Aufprallträger nach Anspruch 3,
   **dadurch gekennzeichnet,**
   daß das Grundrohr (1) als Träger gleicher Biegebeanspruchung ausgebildet ist.

5. Aufprallträger nach einem der vorhergehenden Ansprüche 1 - 4,
   **dadurch gekennzeichnet,**
   daß der Innenraum des verstärkten Bereiches ausgeschäumt ist.

**6.** Aufprallträger nach einem der vorhergehenden
Ansprüche 1 - 4,
**dadurch gekennzeichnet,**
daß im Innenraum des verstärkten Bereiches
ein Versteifungselement (5,6,7) angeordnet ist.

**7.** Aufprallträger nach Anspruch 6,
**dadurch gekennzeichnet,**
daß das Versteifungselement ein um die neutrale Faser verdrilltes Stahlband (5) ist.

**8.** Aufprallträger nach Anspruch 6,
**dadurch gekennzeichnet,**
daß das Versteifungselement ein rechteckiges
Hohlprofil (6) ist, dessen lange Seiten in Stoßrichtung (8) liegen.

**9.** Aufprallträger nach Anspruch 1,
**dadurch gekennzeichnet,**
daß der verstärkende Abschnitt (12) ein Stahlrohr ist, das mit den beidseitig angrenzenden
Abschnitten (1,1') des Grundrohres verbunden
ist.

**10.** Aufprallträger nach Anspruch 9,
**dadurch gekennzeichnet,**
daß die Verbindung eine Reibschweißnaht
(10,10') aufweist.

**11.** Aufprallträger nach den Ansprüchen 1 oder 2
oder 9,
**dadurch gekennzeichnet,**
daß der Rohr (2, 4, 12)- bzw. Schlitzrohrabschnitt eine höhere Festigkeit und/oder Zähigkeit als das Grundrohr (1, 1') aufweist.

**12.** Aufprallträger nach Anspruch 1,
**dadurch gekennzeichnet,**
daß der verstärkte Abschnitt aus einer ein-
oder mehrlagigen Umwicklung des Grundrohres (1) besteht.

**13.** Aufprallträger nach Anspruch 12,
**dadurch gekennzeichnet,**
daß die Umwicklung eine unter Zug aufgewickelte Faser aufweist.

Fig.1

Fig.2

Fig.3

## Fig.4

## Fig.5

## Fig. 6

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | EP-A-0 235 091 (SCHWEIZERISCHE ALUMINIUM AG) * Spalte 5, Zeile 6 - Zeile 11; Abbildungen 9,10 * | 1 | B60J5/04 |
| Y | FR-A-2 279 603 (MANNESMANNROHREN-WERKE) * Seite 2, Zeile 19 - Zeile 24; Abbildungen 1-4 * | 1 | |
| P,X | EP-A-0 425 059 (MANNESMANN) * Spalte 4, Zeile 15 - Spalte 5, Zeile 15; Abbildungen 3,4 * | 1-5 | |
| A | DE-A-3 621 697 (ERBSLÖH) * Spalte 3, Zeile 38 - Zeile 55; Abbildung 6 * | 1,6,7 | |
| A | DE-A-2 414 114 (FORD) * Seite 3, Zeile 21 - Zeile 24; Abbildungen 2,3 * | 1,5 | |

RECHERCHIERTE SACHGEBIETE (Int. Cl.5 )

B60J

Der vorliegende Recherchenbericht wurde für alle Patentansprüche erstellt

| Recherchenort | Abschlußdatum der Recherche | Prüfer |
|---|---|---|
| DEN HAAG | 19 NOVEMBER 1991 | FOGLIA A. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes
   Dokument